# EUROPEAN PATENT APPLICATION

(11) **EP 4 542 819 A1**
(43) Date of publication of application: **23.04.2025**
(21) Application number: 24197467.4
(22) Date of filing: 30.08.2024
(51) Int. Cl.: H02J 7/00, H01R 13/62

(54) **A CHARGING SYSTEM**

(30) Priority: 18.10.2023 US 202318489151
(71) Applicant: Pixieray Oy, 02630 Espoo (FI)
(72) Inventor: Yliluoma, Timo, 02630 Espoo (FI); Huittinen, Otto, 02630 Espoo (FI)
(74) Representative: Moosedog Oy

(57) **Abstract**

The present disclosure provides a charging system (100, 200) comprising a charging interface (102, 204) having a first contact (104, 206) and a second contact (106, 208). The charging system (100, 200) comprises a housing (108, 212) employed to accommodate the charging interface (102, 204). Moreover, the charging system (100, 200) comprises a first magnet (110, 214) having a south pole and a north pole, arranged between the first contact (104, 206) and the second contact (106, 208) of the charging interface (102, 204). Further, a longitudinal axis (AB) of the first magnet (110, 214) is aligned perpendicularly to a first line (XY) that passes through a first centre of the first contact (104, 206) and a second centre of the second contact (106, 208). The south pole and north pole are located at the different sides of the first line (XY).

## Description

### TECHNICAL FIELD

The present disclosure generally relates to an electronic device and particularly to a charging system to charge a rechargeable battery of the electronic device.

### BACKGROUND

Generally, portable electronic devices have witnessed exponential growth over the past two decades, with a significant focus having been placed on enhancing efficiency and user-friendliness of charging arrangement for recharging such portable electronic devices. A pivotal aspect of charging process is transfer of electrical energy from an external source to the device. The charging arrangement employed for the charging process is an important component that ensures efficient charging, safety, reliability, and overall performance of the portable electronic devices.

Traditionally, the charging arrangement comprises charging interface having multiple charging pins that establish an electrical connection with corresponding contacts of charger. However, the conventional design has several limitations. For example, misalignment or loose connection between the charging pins and contact points of the charger can result in inefficient charging, intermittent power transfer, or even potential damage to the charging arrangement or the portable electronic device. Moreover, the conventional charging arrangement are unable to ensure a secure and stable connection during the charging process, which can be particularly problematic in environments where the portable electronic device may be subject to movement or vibrations. Additionally, usage of duplicate or non-compatible charging accessories cannot provide correct voltage or current required by the portable electronic device, leading to slow charging or in some cases, no charging at all, thereby, potentially damaging a battery of the portable electronic device, the charger or the charging arrangement, leading to costly repairs or replacements.

In light of the above discussion, there exists a need for a charging system that addresses the aforementioned limitations, by providing a charging interface to simplify connection of a charger to charge a battery of the portable electronic device.

### SUMMARY

An aim of the present disclosure is to provide a charging system for an electronic device as defined in the appended independent claims to which reference is made to. The charging system facilitates efficient connection between a charger and a charging interface. Further, placement of a first magnet between a first contact and a second contact of the charging interface mitigates various challenges posed by misalignment or cross-alignment between the charging interface and charger. Moreover, by ensuring a secure, stable, and intuitive connection, the magnet-enhanced charging interface design enhances user safety. Advantageous features are set out in the appended dependent claims.

### BRIEF DESCRIPTION OF DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is an illustration of a perspective view of a charging system as per one embodiment of the present disclosure; and
FIG. 2 is an illustration of a bottom view of a charging system implemented within a pair of electronic eyewear according to an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In a first aspect, the present disclosure provides a charging system comprising:
a charging interface having a first contact and a second contact, and configured to be connected to a charger,
a housing employed to accommodate the charging interface and
a first magnet having a south pole and a north pole, arranged between the first contact and the second contact of the charging interface, and wherein a longitudinal axis of the first magnet is aligned perpendicularly to a first line that passes through a first centre of the first contact and a second centre of the second contact, and wherein the south pole and north pole are located at different sides of the first line.

The term *"charging system"* as used throughout the present disclosure relates to an arrangement of electrical and/or electromechanical components that enable transmission of electricity from an external power source to an electrical component. For example, the external power source is a wall-mounted power socket, and the electrical component is a rechargeable power source associated with a mobile device, a smartwatch, a pair of electronic eyewear (such as autofocus eyeglasses), a laptop device and the like. The charging system enables simultaneous connection of each of the external power source and the rechargeable power source such that the electricity supplied by external power source is transmitted to the rechargeable power source via the charging system.

The charging system comprises a charging interface having a first contact and a second contact and configured to be connected to a charger. The term *"charging interface"* as used throughout the present disclosure refers to an electrical component of the charging system that enables establishment of electrical connection between the electrical component such as a rechargeable power source and an external power supply for recharging of the rechargeable power source. Such an electrical connection is established, for example, using the charger that is simultaneously connected to each of the charging interface and the external power supply. The charger can comprise, for example, an adapter that is connected to the external power source (such as a wall-mounted power socket) and a power plug that is connected to the electrical component. Such a connection of the charger between the external power source and the electrical component enables completion of electrical circuit from the external power source to the electrical component, thereby, enabling transmission of electricity from the external power source to the electrical component. Optionally, the charging interface is associated with electronic components including, but not limited to, power converters, transformers, diodes, inductors, protective fuses, capacitors and the like. Such electronic components enable to efficiently regulate and manage supply of electricity from the external power source to the rechargeable power source, thereby, ensuring both safety and optimal recharging of the rechargeable power source. For example, the power converter facilitates conversion of electricality from one form to another, such as alternating current (AC) power supply to direct current (DC) power supply or vice versa, thereby, enabling to match electrical characteristics of the external power source with electrical requirements of the rechargeable power source. In another example, the transformer enables to regulate voltage levels by stepping up or stepping down voltage associated with the supplied electricity, thereby, enabling to ensure that the electricity supplied to the rechargeable power source aligns with voltage specifications of the rechargeable power source to promote efficient charging and operational safety. In yet another example, capacitors integrated into the charging interface enable to smooth out voltage fluctuations and provide a stable output of electricity by rapidly storing and releasing electrical energy, thereby, acting as a buffer to mitigate any sudden changes in voltage, that could otherwise be harmful to the rechargeable power source or impair efficiency of the charging process. The charging interface comprises the first contact and the second contact. The terms *"first contact"* and *"second contact"* as used throughout the present disclosure relate to electrical contact points that are arranged such that simultaneous connection of both the first contact and the second contact with corresponding contain points of the charger enables completion of the electrical circuit for recharging of the rechargeable power source. In one example, the first contact and the second contact are arranged parallely on a plane associated with the charging interface in a vertical direction (such as, a direction from top of the charging interface to bottom of the charging interface when the charging interface is arranged on a flat surface). In such an example, the first contact refers to a contact point disposed proximally towards the top side of the plane the second contact point refers to a contact point disposed proximally towards a bottom side of the plane. The first contact and the second contact are disposed to have a same shape, including but not limited to, a cubical shape (associated with a square cross-section), a spherical shape (associated with a circular cross-section), a hemispherical shape (associated with a circular cross-section), a pyramidal shape (associated with a square cross-section) and the like.

The charging system comprises a housing employed to accommodate the charging interface. The term *"housing"* as used throughout the present disclosure relates to a mechanical or electromechanical component of the charging system that provides an enclosure for electrical components of the charging system. For example, the housing is a substantially cubical, cuboidal or spherical component that enables to protect and provide supports to electrical wiring and electrical components of the charging interface. Further, the housing comprises the plane on which the first contact and the second contact associated with the charging interface are disposed, such that the plane is exposed to external environment as needed to enable connection of the charger to the charging interface. In one example, the charging system is associated with a pair of electronic eyewear. In such an example, the housing is implemented as a temple of the electronic eyewear such that the electrical wiring (such as electrical conductors) and electrical components of the electronic eyewear are stored within the temple. Further, the charging interface is provided within a hinge connecting the temple to a frame of the electronic eyewear such that the charging interface is exposed for connection of the charger when the temple is closed with respect to the frame and hidden to prevent connection of the charger when the temple is opened with respect to the frame. Optionally, the housing is fabricated using an electric insulator, such that the electrical insulator is selected from a group comprising, but not limited to, cellulose acetate, propionate plastic, nylon-based plastic, polyamide, epoxy resin, ceramic, wood and the like.

The charging system comprises a first magnet having a south pole and a north pole, arranged between the first contact and the second contact of the charging interface. For example, the first magnet is implemented as a bar magnet having the south pole at one extreme end of the bar magnet and the north pole at another extreme end of the bar magnet. The first magnet is arranged between the first magnet and the second magnet such that when the first contact and the second contact are arranged parallely to each other on the plane associated with the charging interface, the first magnet is disposed on the charging interface between the first contact and the second contact. Further, a longitudinal axis of the first magnet is aligned perpendicularly to a first line that passes through a first centre of the first contact and a second centre of the second contact, and wherein the south pole and north pole are located at different sides of the first line. The terms *"south pole"* and *"north pole"* as used throughout the present disclosure denote different magnetic polarities or orientations of the first magnet. The term *"longitudinal axis of the first magnet"* as used throughout the present disclosure relates to an imaginary line connecting the north pole of the first magnet to the south pole of the first magnet. For example, when the first magnet is implemented as a bar magnet having a cuboidal shape (or a rectangular cross-section), the longitudinal axis of the first magnet refers to an imaginary line parallel to longest side of the bar magnet. The term *"centre of the contact"* as used in reference to the first contact and the second contact refers to centre of cross-section of the corresponding contact such that the cross-section is associated with the plane on which the contact is disposed. For example, when each of the first contact and the second contact are arranged parallely on the plane of the charging interface and each of the first contact and the second contact is implemented to have a hemispherical shape, the first centre of the first contact refers to a centre of circular cross-section associated with disposition of the first contact on the plane and the second centre of the second contact refers to a centre of circular cross-section associated with disposition of the second contact on the plane. The term *"first line"* as used throughout the present disclosure relates to an imaginary line that connects the centre of circular cross-section associated with disposition of the first contact on the plane and the centre of circular cross-section associated with disposition of the second contact on the plane. Further, the south pole and north pole are located at different sides of the first line such that when the first magnet is arranged between the first contact and the second contact and the longitudinal axis of the first magnet is aligned perpendicularly to the first line, the first magnet is disposed beneath the first contact on the plane in a sideways manner and the second contact is disposed beneath the first magnet on the plane. Further, the second contact is arranged linearly with respect to the first contact. Consequently, the first line connecting the first centre of the first contact and the second centre of the second contact is aligned parallely to the vertical direction of charging interface and the longitudinal axis of the first magnet is aligned perpendicularly to each of the first line as well as the vertical direction of the charging interface. The first line serves as a reference line or baseline for orientating the north pole and south pole with respect to the first contact and the second contact. This south pole and the north pole are located at different sides the first line, for example, the north pole and the south pole are positioned vertically relative to the first line. Such a vertical orientation of the first magnet perpendicularly to the first line facilitates a clear separation of the north pole and the south pole from the first contact and the second contact, aiding in the establishment of a directional electromagnetic or electrostatic field along the vertical direction. Such a setup is crucial, such as, for systems requiring a vertical orientation of magnetic field lines with respect to the first line, thereby, enhancing control of the electromagnetic field associated with the first magnet and minimizing unwanted interactions of the north pole and the south pole with the first contact and the second contact. Further, the positioning of the north pole and the south poles on different sides of the first line enables to establish a lateral orientation of the north pole and the south pole with respect to the charging interface, thereby, facilitating a horizontal orientation of the electromagnetic or electrostatic field associated with the first magnet along the lateral direction. Such a positioning of the north pole and the south pole is beneficial for systems requiring a horizontal orientation of magnetic field lines with respect to the first line, thereby, ensuring a clear separation of the north pole and the south pole while also enabling effective control over lateral electromagnetic or electrostatic interactions of the first magnet. The first magnet is disposed at an equidistance from each of the first contact and the second contact to enable generation of a symmetric magnetic field across the charging interface. The symmetric magnetic field prevents misalignment issues that may lead to a poor connection of the charger with the charging interface, leading to inefficient or interrupted charging of the rechargeable power source.

In one embodiment, there is arranged at least one electrical component associated with the housing. The term *"electrical component"* as used throughout the present disclosure refers to a component of the charging system that receives an electrical input, such as supply of electricity, to provide an output or enable operation of another component of the charging system. Such an electrical component is disposed inside the housing or optionally, on an external surface associated with the housing. For example, the charging system is associated with an electronic eyewear having a display. In such an example, the electrical component is implemented as a light-emitting diode (LED) array capable of displaying information to eyes of a wearer of the electronic eyewear. In another example, the electrical component is implemented as one or more light sources and/or light sensors to respectively emit light or receive light such that the one or more light sources and/or light sensors are partially or completely disposed inside the housing. The term *"light source"* as used throughout the present disclosure relates to an electronic component capable of receiving an instruction to emit a light pulse and correspondingly, emit the light pulse. For example, the light source is implemented as multiple LEDs that are integrated discreetly on a temple of the electronic eyewear to provide feedback to the wearer without disturbing a field of view of the wearer. The term *"light sensor"* as used throughout the present disclosure refers to an electronic component capable of receiving emitted or reflected light to enable determination of at least one characteristic associated with the emitted or reflected light.

In another embodiment, the housing comprises a rechargeable power source. The term *"power source"* as used throughout the present disclosure relates to an electrical device capable of supplying electricity to one or more electrical components to enable operation of such electrical components. The power source is rechargeable to allow connection of the power source to an external power supply, such as, an alternating current power supply to enable recharging of the power source for repeated operation of the electrical components. For example, the rechargeable power source is implemented as a Li-ion battery, an NiCd battery, an NiMH battery and the like that is disposed inside the housing. Further, the rechargeable power source is electrically connected to one or more electrical components using, for example, an electrical conductor, an electric cable and the like. The integration of the rechargeable power source within the housing is beneficial in portable or remote devices, electric vehicles, and various other applications where efficient energy management is important.

In yet another embodiment, the rechargeable power source supplies electricity to the at least one electrical component or receives electricity from an external power source. The rechargeable power source is electrically connected to the electrical component using for example, an electrical conductor, an electric cable and the like or the external power source, for example, by connection of the charger simultaneously to the charging interface and the external power source. In one example, the rechargeable power source is connected to at least one electrical component, such as a speaker associated with a mobile device, a display associated with a smartwatch, a light source associated with an electronic eyewear or a touchpad associated with a laptop, such that the rechargeable power source supplies stored electricity to enable operation of the corresponding electrical components. In another example, the rechargeable power source is connected to the external power source by simultaneous electrical connection of the charger to each of the charging interface (that is electrically connected to the rechargeable power source) and the external power source such that the connection of the charger to the charging interface enables transmission of electricity from the external power source via the charger and the charging interface to the rechargeable power source to enable recharging of the rechargeable power source.

In still another embodiment, the charger has a protrusion. The protrusion is aimed for being in contact with an outer surface of the housing to enable accurate positioning of the charger in respect of the housing when the housing and the charger are coupled. The term *"protrusion"* as used throughout the present disclosure in reference to the charger relates to an extended portion of body of the charger that is arranged against the outer surface of the housing when the charger is coupled to the charging interface. The protrusion enables accurate arrangement of the charger against the housing. For example, the protrusion can be implemented as an elongated element, a cylindrical element, an L-shaped element and the like. Optionally, the protrusion of the charger can be caused to snap-fit against the housing when the charger is coupled to the charging interface to provide tactile feedback, such that the tactile feedback is associated with successful connection of the charger with the charging interface, thereby, making the coupling process more intuitive. Correspondingly, similar tactile feedback can also be provided during decoupling of the charger from the charging interface to inform of a successful disconnection of the charger from the charging interface. The protrusion facilitates precise alignment between the charger and the housing, ensuring that the electrical contacts are correctly positioned for effective charging or data transfer. It will be appreciated that the contact between the protrusion and the outer surface of the housing provides a secure coupling between the charger and the charging interface, thereby, reducing a risk of disconnection of the charger from the charging interface during recharging of the rechargeable power source or data transfer. Further, the protrusion provides a compatibility feature, ensuring that only a correct charger comprising a matching protrusion is couplable with the charging interface, thereby, preventing potential damage to the charger interface through usage of incompatible chargers.

In still another embodiment, the charger has an L-shaped form. The charger is implemented to have the L-shaped form such that the protrusion of the charger is disposed perpendicularly to the plane of the charging interface comprising the first contact and the second contact. Further, when the charger is connected to the charging interface, the protrusion of the charger having the L-shaped form is arranged against the housing, thereby, enabling stable arrangement of the charger and preventing unintentional movement of the charger with respect to the housing during charging of the rechargeable power source. The L-shaped form of the charger enables to increase durability and longevity of the charging interface by preventing misalignment of the charger with respect to the first contact and the second contact. Further, the L-shaped form protects the charging interface from any external forces that may be exerted by the charger when the charger is coupled to the charging interface by transferring the external force evenly onto the housing, thereby, reducing application of any concentrated pressure on the charging interface.

In a further embodiment, the charger has a third contact and a fourth contact. The third contact and the fourth contact are to be connected with the first contact and the second contact of the charging interface. The charger comprises a planar external surface such that the third contact and the fourth contact are disposed on the planar external surface. Further, when the charger is coupled to the charging interface for recharging the rechargeable power source, the planar external surface of the charger aligns with the plane of the charging interface comprising the first contact and the second contact such that the third contact and the fourth contact respectively come in contact with the first contact and the second contact to establish the electrical connection between the external power supply and the rechargeable power source. It will be appreciated that the electrical connection of the third contact and the fourth contact with the first contact and the second contact enables completion of the electrical circuit from the external power supply to the charging interface, thereby, enabling recharging of the rechargeable power source.

In a still further embodiment, the charger has a second magnet having a magnetic south pole and a magnetic north pole. The second magnet lies between the third contact and the fourth contact. Further, a length axis of the second magnet is aligned perpendicularly to a second line that passes through a third centre of the third contact and a fourth centre of the fourth contact. The magnetic south pole and the magnetic north pole are located at different sides of the second line. The second magnet is disposed on the planar external surface of the charger comprising the third contact and the fourth contact. The term *"length axis of the second magnet"* as used throughout the present disclosure relates to an imaginary line connecting a magnetic north pole of the second magnet to a magnetic south pole of the second magnet. For example, when the second magnet is implemented as a bar magnet having a cylindrical shape (or a circular cross-section), the length axis of the second magnet refers to an imaginary line parallel to an axis of the bar magnet. The second magnet is aligned such that when the charger is placed in front of the charging interface, the third contact is collinear with the first contact, the second magnet is collinear with the first magnet and the fourth contact is collinear with the second contact. Further, during coupling of the charger with the charging interface, the magnetic south pole of the second magnet is attracted by magnetic attraction towards the north pole of the first magnet. Similarly, the magnetic north pole of the second magnet is attracted towards the south pole of the first magnet. Such an attraction between the opposite poles of the second magnet and the first magnet ensure proper alignment of the third contact and the fourth contact with the first contact and the second contact, respectively, thereby, ensuring quick and accurate coupling of the charger with the charging interface without necessitating repetitive plugging and/or unplugging. Further, in an event of misalignment of the charger with the charging interface or presence of foreign objects between the charger and the charging interface, the magnetic attraction between the first magnet and the second magnet will be comparatively weak, thereby preventing loose coupling of the charger with the charging interface and reducing risks associated with short-circuiting or other electrical damage to the charging interface. Moreover, proper magnetic connection between the first magnet and the second magnet enables optimal alignment of charging coils in wireless charging scenarios, thereby, ensuring efficient power transfer and reduced energy losses. The first magnet and the second magnet provide secure yet impermanent coupling between the charger and the charging interface, thereby, ensuring that the first contact, the second contact, the third contact and the fourth contact maintain electrical connection during charging of the rechargeable power source while also enabling easy detachment when required. For example, if the charging interface or the charger are accidentally pulled away from each other, the magnetic connection ensures easy detachment, thereby, reducing risk of damage to the charging interface and/or the charger. Also, the first magnet and the second magnet prevent requirement of physical insertion of one component of the charger into another component of the charging interface (unlike universal serial bus-based charging), thereby, reducing wear and tear of the first contact, second contact, third contact and fourth contact. Additionally, perpendicular alignment of the longitudinal axis with the fourth line and the length axis with the second line ensures that the first contact, the second contact, the third contact and the fourth contact are unobstructed by the first magnet and the second magnet, respectively, thereby, ensuring uninterrupted and optimized electrical connection between the charger and the charging interface. Further, positioning of the first magnet and the second magnet between the corresponding pairs of contacts and perpendicular alignment of the respective magnets, ensures efficient use of limited and compact space within portable devices such as mobile devices, laptop devices, smartwatches, electronic eyewear and the like, thereby, allowing compact fabrication of such portable devices as well as the charger.

In a further embodiment, the rechargeable power source is removable. For example, the housing that is configured to store the rechargeable power source comprises a cap (for example, implemented as a removable panel) such that the cap is openable to reveal the rechargeable power source. Further, the rechargeable power source is connected to the charging interface using electrical connections that are configured to be disconnected as needed. For example, the electrical connections that connect the rechargeable power source to the charging interface are disposed on an inner surface of the housing. Consequently, the electrical connections are disconnected when the cap of the housing is opened and subsequently, the rechargeable power source is removed from the housing. Such removability associated with the rechargeable power source enables convenient repair of the electrical connections that connect the rechargeable power source to the charging interface as well as easy replacement of the rechargeable power source after completion of operating life of the rechargeable power source. Further, the rechargeable power source is removable to enable safe storage of the rechargeable power source, such as, during airline travel or for safe storage of the portable device (such as electronic eyewear) comprising the rechargeable power source.

In a further embodiment, the housing is a watertight body. The housing is fabricated to prevent ingress of moisture into the housing, thereby, potentially causing failure of electrical components disposed within the housing. For example, the housing is associated with a pair of electronic eyewear that is worn around eyes of a wearer. It will be appreciated that moisture associated with sweat of the wearer, environmental moisture from rain, snow and the like may ingress into the housing, thereby, potentially damaging the rechargeable power source disposed within the housing. The housing is implemented to be free of openings and/or crevices to prevent such ingress of moisture into the housing. The watertight body provides a robust barrier against moisture ingress, thereby, ensuring that the electrical components of the charging system remain dry and functional throughout usage. Further, by preventing water damage, the watertight nature of the housing significantly extends an operating lifespan of the charging system as well as the portable device comprising the charging system. The watertight nature of the housing (such as, maintained using water seals, adhesives, gaskets and the like provided with the housing) maintains electrical integrity of the charging interface, ensuring efficient and safe charging of the rechargeable power source. Moreover, by preventing moisture ingress, the watertight nature of the housing reduces risk of corrosion of electrical components disposed within the housing. Additionally, users can confidently use the charging system to charge the rechargeable power source associated with portable devices, such as, in adverse weather conditions or moist environments without fear of water damage, thereby, providing such users flexibility to use and charge their portable devices in a wide range of scenarios, including outdoor, marine, or industrial environments associated with high moisture content.

In summary, the charging system for charging of devices (for example, autofocus glasses) comprises the charging interface having the first contact, the first magnet and the second contact, allowing convenient and precise alignment of charger with the charging interface without requirement of additional expenditure of effort for accurately inserting and/or removing one component from another component as with conventional chargers, thereby, increasing charging efficiency as well as longevity and durability associated with the charging system and the devices comprising the charging system.

According to one embodiment when the charger is coupled to the charging interface, the first contact is electrically connected to the third contact, the second contact is electrically connected to the fourth contact and the first magnet and the second magnet attract each other. In practice the south pole of the first magnet is facing the magnetic north pole of the second magnet, and the north pole of the first magnet faces the magnetic south pole of the second magnet.

In the description the terms south pole and magnetic south pole are interchangeable and do have the same meaning. In the description the terms north pole and north magnetic south pole are interchangeable and do have the same meaning.

### DETAILED DESCRIPTION OF DRAWINGS

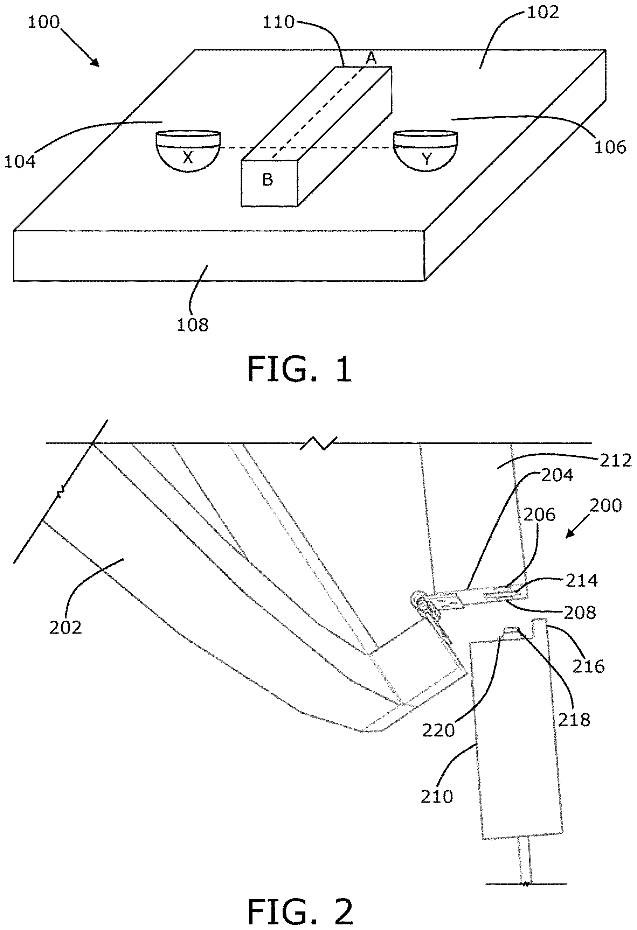

Referring to FIG. 1, there is shown an illustration of a perspective view of a charging system **100** as per one embodiment of the present disclosure. The charging system **100** comprises a charging interface **102** having a first contact **104** and a second contact **106** and configured to be connected to a charger (shown in FIG. 2). As shown, each of the first contact **104** and the second contact **106** are implemented as hemispherical elements. The charging system **100** comprises a housing **108** employed to accommodate the charging interface **102.** The housing **108** is an enclosed cuboidal element having a rectangular cross-section. The charging system **100** comprises a first magnet **110** having a south pole and a north pole, arranged between the first contact **104** and the second contact **106** of the charging interface **102.** Further, a longitudinal axis **AB** of the first magnet **110** is aligned perpendicularly to a first line **XY** that passes through a first centre of the first contact **104** and a second centre of the second contact **106.** Moreover, the south pole and north pole are located at different sides of the first line **XY.**

Referring to FIG. 2, there is shown an illustration of a bottom view of a charging system **200** implemented within a pair of electronic eyewear **202** according to an embodiment of the present disclosure. The charging system **200** comprises a charging interface **204** having a first contact **206** and a second contact **208** and configured to be connected to a charger **210.** The charging system **200** comprises a housing **212** employed to accommodate the charging interface **204.** As shown, the housing **212** is implemented as a left temple of the electronic eyewear **202.** Further, the charging system **200** comprises a first magnet **214** having a south pole and a north pole arranged between the first contact **206** and the second contact **208** of the charging interface **204.** Moreover, the charger **210** has a protrusion **216.** The protrusion **216** is aimed for being in contact with an outer surface of the housing **212** to enable positioning the charger **210** in respect of the housing **212** when the housing **212** and the charger **210** are coupled. As shown, the charger **210** has an L-shaped form. Moreover, the charger **210** has a third contact **218** and a fourth contact (not shown). The third contact **218** and the fourth contact are to be connected with the first contact **206** and the second contact **208** of the charging interface **204.** Further, the charger **210** has a second magnet **220** having a magnetic south pole and a magnetic north pole. The second magnet **220** lies between the third contact **218** and the fourth contact.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A charging system (100, 200) comprising:
a charging interface (102, 204) having a first contact (104, 206) and a second contact (106, 208), and configured to be connected to a charger (210),
a housing (108, 212) employed to accommodate the charging interface (102, 204), and
a first magnet (110, 214) having a south pole and a north pole, arranged between the first contact (104, 206) and the second contact (106, 208) of the charging interface (102, 204), and wherein a longitudinal axis (AB) of the first magnet (110, 214) is aligned perpendicularly to a first line (XY) that passes through a first centre of the first contact (104, 206) and a second centre of the second contact (106, 208), and wherein the south pole and north pole are located at different sides of the first line (XY).

2. The charging system (100, 200) according to claim 1, wherein there is arranged at least one electrical component associated with the housing (108, 212).

3. The charging system (100, 200) according to any of the preceding claims 1-2, wherein the housing (108, 212) comprises a rechargeable power source.

4. The charging system (100, 200) according to claim 3, wherein the rechargeable power source supplies electricity to the at least one electrical component or receives electricity from an external power source.

5. The charging system (100, 200) according to claim 1, wherein the charger (210) has a protrusion (216), wherein the protrusion (216) is aimed for being in contact with an outer surface of the housing (108, 212) to enable positioning the charger (210) in respect of the housing (108, 212) when the housing (108, 212) and the charger (210) are coupled.

6. The charging system (100, 200) according to any of the preceding claims 1 or 5, wherein the charger (210) has an L-shaped form.

7. The charging system (100, 200) according to any of the preceding claims 1 or 5-6, wherein the charger (210) has a third contact (218) and a fourth contact, wherein the third contact (218) and the fourth contact are to be connected with the first contact (104, 206) and the second contact (106, 208) of the charging interface (102, 204).

8. The charging system (100, 200) according to any of the preceding claims 1 or 5-7, wherein the charger (210) has a second magnet (220) having a magnetic south pole and a magnetic north pole, and wherein the second magnet (220) lies between the third contact and the fourth contact, and wherein a length axis of the second magnet (220) is aligned perpendicularly to a second line that passes through a third centre of the third contact and a fourth centre of the fourth contact, and wherein the magnetic south pole and the magnetic north pole are located at different sides of the second line.

9. The charging system (100, 200) according to any of the preceding claims 3-4, wherein the rechargeable power source is removable.

10. The charging system (100, 200) according to any of the preceding claims 1-3 or 5, wherein the housing (108, 212) is a watertight body.

11. The charging system (100, 200) according to any of the preceding claims 8-10, wherein when the charger is coupled to the charging interface, the first contact is electrically connected to the third contact, the second contact is electrically connected to the fourth contact and the first magnet and the second magnet attract each other.
